# EUROPÄISCHE PATENTSCHRIFT

(11) **EP 0 610 919 B1**
(45) Veröffentlichungstag und Bekanntmachung des Hinweises auf die Patenterteilung: **11.09.1996**
(21) Anmeldenummer: 94101991.1
(22) Anmeldetag: 09.02.1994
(51) Int. Cl.: F16D 65/097

(54) **Federanordnung zum Niederhalten der Bremsbeläge in einer Scheibenbremse**
Retainer spring for disc brake pads
Ressort de retenue pour garnitures d'un frein à disque

(30) Priorität: 10.02.1993 DE 4303961
(43) Veröffentlichungstag der Anmeldung: 17.08.1994
(73) Patentinhaber: PERROT BREMSEN GmbH, D-68229 Mannheim (DE)
(72) Erfinder: Antony, Paul, D-67550 Worms (DE)
(74) Vertreter: Graf von Wengersky, Anton

(56) Entgegenhaltungen:
- EP-A- 0 153 280
- EP-A- 0 180 555
- DE-A- 3 323 362
- DE-A- 3 445 488
- GB-A- 2 121 128

## Beschreibung

Die Erfindung betrifft eine Federanordnung zum Niederhalten der Bremsbeläge in einer Scheibenbremse, wobei der Belagträger einen sich radial nach außen erstreckenden belagfreien Abschnitt aufweist, an dem ein Halteabschnitt einer Niederhaltefeder befestigbar ist, wobei die Niederhaltefeder symmetrisch ausgebildet und aus Stahldraht hergestellt ist und in der Mitte ihrer Symmetrieachse einen den belagfreien Abschnitt des Belagträgers allseitig umgreifenden Halteabschnitt und zwei sich von diesem in entgegengesetzten Richtungen erstreckende Abschnitte umfaßt, die sich an zwei Anlageflächen abstützen, die auf beiden Seiten einer den belagfreien Abschnitt des Belagträgers aufnehmenden Öffnung eines Bremssattels an dessen Unterseite ausgebildet sind.

Eine Federanordnung dieser Gattung ist aus der DE 33 23 362 A1 bekannt.

Symmetrisch ausgeführte Niederhaltefedern sind vielfach bekannt, und beispielhaft wird auf die GB-PS 1 586 465, die US-PS 4 445 595, die DE-OS 25 58 294, die DE 33 23 362 A1, die DE 36 21 507 A1, die EP 0 153 280 B1 und die EP 0 211 719 A1 verwiesen. Diese bekannten Niederhaltefedern, die zumeist als Drahtfeder ausgebildet und am Belagträger gehaltert sind, stützen sich mit ihren gleichförmig ausgebildeten Federschenkeln am Bremssattel ab, um den Bremsbelag radial einwärts vorzuspannen. Im Abstützbereich des Sattels sind keine Vorkehrungen getroffen, die es ermöglichen würden, mit diesen symmetrischen Federn zusätzlich eine tangentiale Federkraftkomponente auf den zugeordneten Belagträger auszuüben, um dadurch bei einem Bremsvorgang das seitliche Anschlagen des Belagträgers an dessen Führungsbereich zu vermeiden. Bei einigen dieser bekannten Federanordnungen stehen Abschnitte der Niederhaltefedern in Richtung Bremskolben und Bremssattelschenkel über die Ebene der Belagträger vor, wodurch bei einem Ausschwenken des Sattels zum Auswechseln der Reibbeläge ein nachteiliges Anschlagen eintritt.

Aus der DE 39 10 154 A1 ist eine Niederhaltefeder mit zueinander unsymmetrisch ausgebildeten Federschenkeln bekannt, die den Reibbelag zur Vermeidung von Klappergeräuschen radial in Richtung zum Zentrum der Bremsscheibe gegen die Führung der Belagträger und tangential in Richtung der Auslaufseite der Bremsscheibe gegen den zugeordneten seitlichen Führungsabschnitt des Bremsenträgers oder des Bremssattels andrückt. Aus der EP 0 203 841 A1, der EP 0 202 993 A1, der EP 0 059 128 A1 und der DE 31 07 531 A1 sind weitere unsymmetrisch ausgebildete Niederhaltefedern zur radialen und tangentialen Vorspannung des Belagträgers gegen die Führungsabschnitte des Belagträgers bekannt, die entweder als Blattfeder ausgebildet und am Bremssattel oder als Drahtfeder ausgebildet und am zugeordneten Belagträger befestigt sind.

Diese bekannten unsymmetrisch ausgebildeten Niederhaltefedern haben den gemeinsamen Nachteil, daß bei der Bremsenmontage oder einem Belagwechsel die erforderliche Einbaulage der Niederhaltefeder entsprechend der bevorzugten Bremsrichtung falsch sein kann. Dies führt dann zu einer tangentialen Vorspannung des Belages in die falsche Richtung (Einlaufseite der Bremsscheibe) und somit zu einem Luftspalt zwischen Belagträger und Abstützung. Dadurch kommt es beim Bremsvorgang zu einem unerwünschten Anschlagen.

Alle bekannten Niederhaltefedern nach den vorstehend erwähnten Druckschriften haben aber den zusätzlichen gemeinsamen Nachteil einer verhältnismäßig großen Steifigkeit, so daß sich eine steile Federcharakteristik ergibt. Bei diesen bekannten Niederhaltefedern ist der Federweg, der sich aus der maximal zur Verfügung stehenden biegsamen Länge (hier frei bewegliche Schenkellänge) ergibt, relativ klein. Das hat aber zur Folge, daß die wirksame Federkraft, die für die Schwingungsdämpfung des Belages zur Vermeidung eines radialen Anschlagens an dem Bremssattel erforderlich ist, über die Drahtdicke oder die Materialqualität erzielt werden muß. Da die Wahl der Drahtdicke jedoch durch den zur Verfügung stehenden Einbauraum begrenzt ist, kann die erforderliche Federkraft nur durch eine Erhöhung der Federhärte erzielt werden. Diese Materialien sind dann hart und spröde und neigen infolge der Schwingungsbelastungen zu frühzeitigen Federbrüchen.

Die Aufgabe der Erfindung besteht in der Entwicklung einer gattungsgemäßen Federanordnung, bei der die Feder eine flache Federcharakteristik aufweist.

Erfindungsgemäß wird diese Aufgabe mit einer gattungsgemäßen Federanordnung gelöst, die dadurch gekennzeichnet ist daß der Halteabschnitt der Niederhaltefeder auf der dem Reibbelag abgekehrten Seite des belagfreien Abschnittes des Belagträgers von einem durchgehenden V-förmigen Verbindungsabschnitt und auf der dem Reibbelag zugekehrten Seite des belagfreien Abschnittes von zwei zu dem V-förmigen Verbindungsabschnitt parallen Federschenkeln gebildet ist, daß sich von diesen Federschenkeln freie Federschenkel in entgegengesetzten Richtungen nach außen erstrecken und daß im Übergangsbereich von jedem Federschenkel in den entsprechenden freien Federschenkel mindestens eine Federwindung ausgebildet ist.

Durch diese konstruktiven Maßnahmen wird eine flache Federcharakteristik der Niederhaltefeder erzielt, so daß im Vergleich zum Stand der Technik größere Schwingungsausschläge des Bremsbelages mit gleicher Federkraft gedämpft werden können oder bei gleichen Schwingungsausschlägen eine geringere wirksame Federkraft erforderlich ist. Dadurch wird die Gefahr von Schwingungsbrüchen verringert.

Um den Belagträger sowohl radial als auch tangential in der bevorzugten Drehrichtung der Bremsscheibe vorspannen zu können, ist in weiterer Ausgestaltung der Erfindung vorgesehen, daß der Bremssattel im Bereich der Anlageflächen für die freien Federschenkel der Niederhaltefeder unsymmetrisch ausgebildet ist, daß eine auf der Einlaufseite der Bremsscheibe ausgebildete schräge Anlagefläche zur Radialebene stärker geneigt ist als eine auf der Auslaufseite ausgebildete schräge Anlagefläche und daß eine auf der Einlaufseite der Bremsscheibe ausgebildete tangentiale Anlagefläche von der entsprechenden Tangente der Bremsscheibe einen größeren Abstand aufweist als eine auf der Auslaufseite ausgebildete tangentiale Anlagefläche.

Bei Scheibenbremsen sind häufig Einrichtungen vorgesehen, die es ermöglichen, den Verschleiß der Reibbeläge rasch und einfach überprüfen zu können. Zu diesem Zweck ist bei einer besonders vorteilhaften Ausbildung der Erfindung vorgesehen, daß der belagfreie Abschnitt des Belagträgers eine radial verlaufende U-förmige Ausnehmung aufweist, in die eine Verschleißanzeige einsetzbar ist, und daß der Verbindungsabschnitt der Niederhaltefeder die Verschleißanzeige radial übergreift und festlegt. Durch diese kontsruktiven Maßnahmen kann die Verschleißanzeige ohne weitere Hilfsmittel, wie z.B. Kleben od. dgl., in ihrer Lage verliersicher positioniert werden.

Weitere Einzelheiten, Vorteile und Merkmale der Erfindung ergeben sich aus der folgenden Beschreibung und den Zeichnungen, auf die bezüglich einer erfindungswesentlichen Offenbarung aller im Text nicht erwähnten Einzelheiten ausdrücklich hingewiesen wird. Es zeigt:
Fig. 1 einen schematischen Schnitt durch eine Scheibenbremse in einer zur Bremsscheibe parallelen Ebene im Bereich der Belagträger,
Fig. 2 eine Darstellung wie Fig. 1 bei ausgebauter Niederhaltefeder,
Fig. 2a eine Darstellung ähnlich wie Fig. 2 einer abgewandelten Ausführungsform des Belagträgers,
Fig. 3 einen Querschnitt durch die Scheibenbremse rechtwinklig zur Bremsscheibe,
Fig. 4 eine Draufsicht auf die Scheibenbremse,
Fig. 5 eine Darstellung ähnlich wie Fig. 1 mit einer am Belagträger angebrachten Verschleißanzeige,
Fig. 6 eine Seitenansicht der Niederhaltefeder,
Fig. 7 eine Draufsicht auf die Niederhaltefeder nach Fig. 6,
Fig. 8 einen Schnitt durch die Niederhaltefeder nach der Linie 8-8 in Fig. 6,
Fig. 9 eine Einzelheit von Fig. 7,
Fig. 10 einen abgewandelten Belagträger von der Belagseite her gesehen,
Fig. 11 einen Schnitt nach der Linie 11-11 in Fig. 10, und
Fig. 12 den Belagträger nach Fig. 10 von der belagfreien Seite her gesehen.

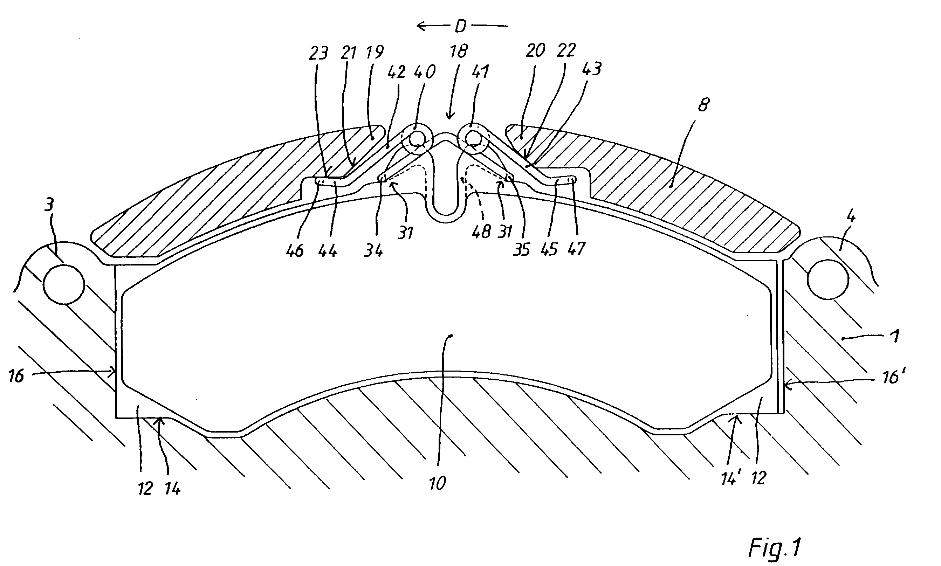

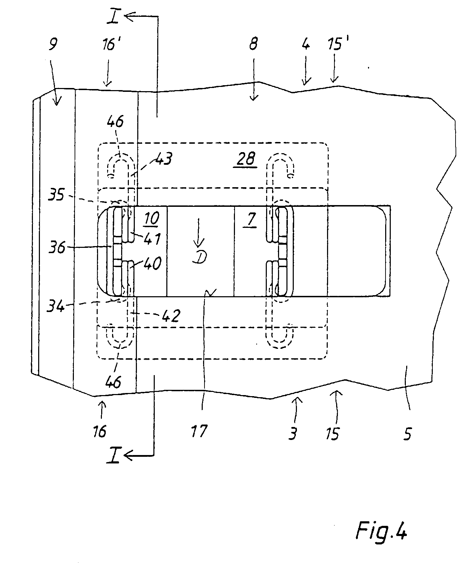

Wie dies insbesondere aus den Fig. 1 bis 4 ersichtlich ist, besteht die Scheibenbremse aus einem Bremsenträger 1 mit zwei seitlichen, die Bremsscheibe 2 übergreifenden Abschnitten 3, 4, die der Bolzenführung eines ebenfalls die Bremsscheibe übergreifenden Bremssattels 5 dienen. Der Bremssattel besitzt eine Betätigungseinrichtung 6, mit deren Hilfe ein Reibbelag 7 direkt an die Bremsscheibe 2 zur Anlage bringbar ist, einen die Bremsscheibe 2 übergreifenden Bereich 8 und einen sich daran anschließenden, sich radial nach innen erstreckenden Sattelschenkel 9, der bei Bremsbetätigung indirekt den der Betätigungseinrichtung 6 gegenüberliegenden Reibbelag 10 an die Bremsscheibe 2 zur Anlage bringt.

Die beiden Reibbeläge 7, 10 mit ihren zugehörigen Belagträgern 11, 12 sind in Führungsabschnitten des Bremsenträgers 1 an radial inneren Führungsflächen 13, 13', 14, 14' und in Umfangsrichtung an seitlichen Führungsflächen 15, 15', 16, 16' gehalten und geführt. Diese Führungsabschnitte bzw. -flächen für die Belagträger 11, 12 im Bremsenträger 1 sind geradlinig und zueinander parallel.

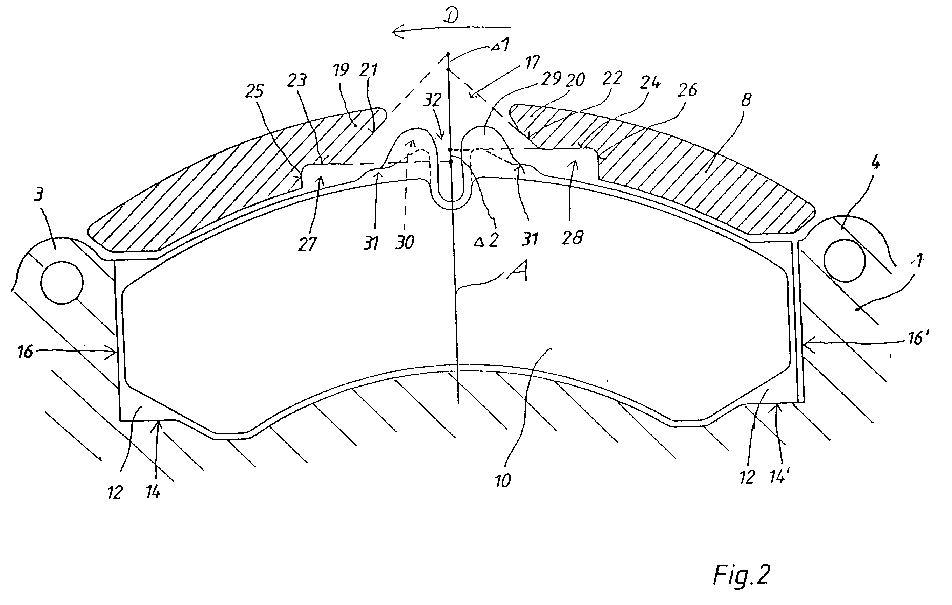

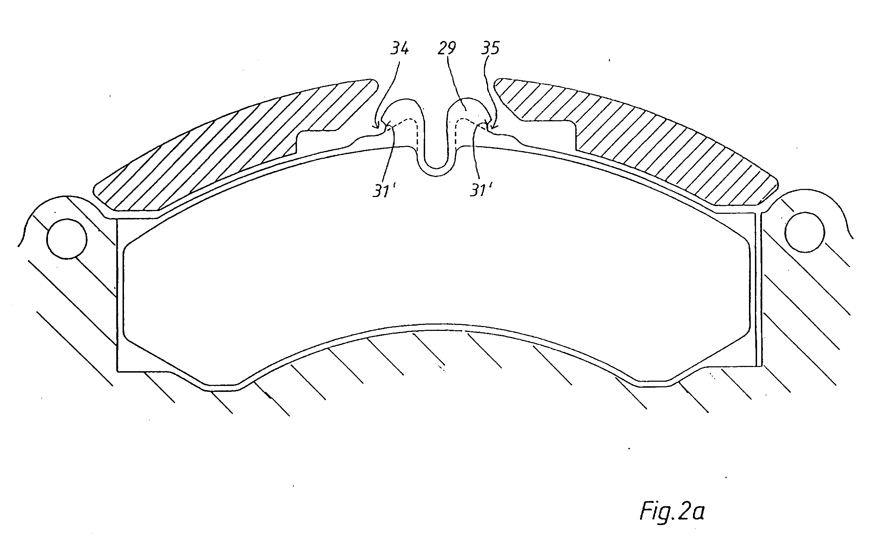

Der die Bremsscheibe 2 übergreifende Bereich 8 des Bremssattels 5 weist eine Öffnung 17 auf, die unter anderem zur Aufnahme einer Niederhaltefeder 18 dient. In den Fig. 1 und 2 ist die bevorzugte Bremsrichtung bei Vorwärtsfahrt mit dem Pfeil D bezeichnet. Die Öffnung 17 des Bremssattels 5 bildet eine linke und eine rechte Leiste 19, 20. Der Querschnitt jeder Leiste verläuft schräg nach innen über den Umfang der Bremsscheibe 2 in Richtung der Abschnitte 3, 4 des Bremsenträgers 1, so daß eine linke und eine rechte schräge Anlagefläche 21 und 22 am Bremsenträger 1 gebildet wird. Die Ebenen der Anlageflächen 21, 22 gegenüber einer Symmetrieachse A zwischen der Einlaufseite und der Auslaufseite der Bremsscheibe sind unterschiedlich und um den Betrag Δ1 versetzt angeordnet, wie dies nachfolgend in Verbindung mit dem Einbau der Niederhaltefeder 18 noch näher erläutert wird. An diese schrägen Anlagefläche 21, 22 schließen sich annähernd parallel zu den inneren Führungsflächen 13, 13', 14, 14' und annähernd rechtwinklig zur Symmetrieachse A beidseitig weitere Anlageflächen 23, 24 an, die zur Aufnahme der Federschenkel der Niederhaltefeder 18 dienen. Die Ebenen dieser Anlageflächen 23, 24 sind um den Betrag Δ2 versetzt zueinander angeordnet. Von diesen Anlageflächen 23, 24 erstrecken sich zum Umfang der Bremsscheibe 2 weitere Flächen 25, 26, die zur Symmetrieachse A parallel sind. Auf der Einlaufseite der Bremsscheibe 2 wird daher ein Freiraum 28 und auf der Auslaufseite ein Freiraum 27 gebildet, die zur Aufnahme der Federschenkel der Niederhaltefeder 18 dienen, wobei der Freiraum 28 höher ist als der Freiraum 27.

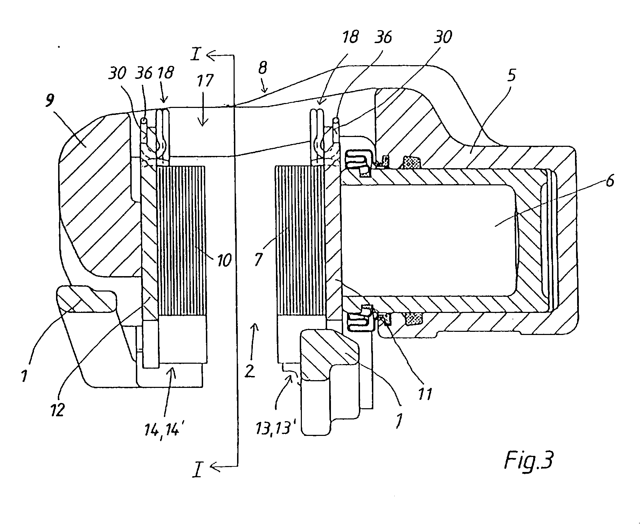

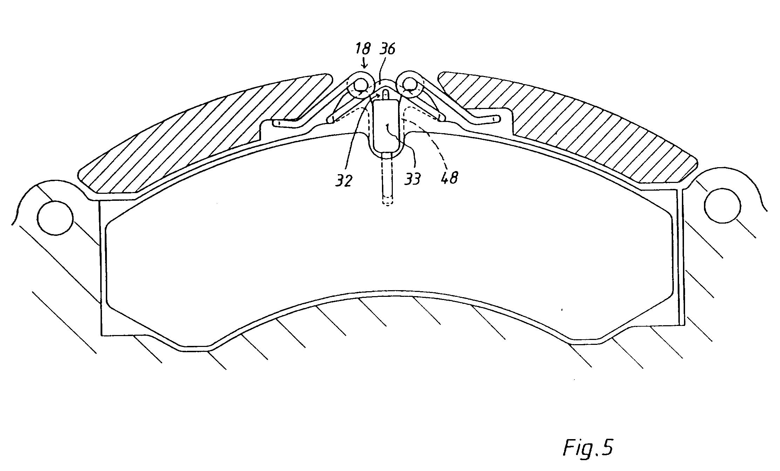

Die beiden Belagträger 11, 12 sind identisch ausgebildet und besitzen in ihrer Mitte einen radial und annähernd konisch nach außen in die Sattelöffnung 17 verlaufenden belagfreien Abschnitt 29. Wie insbesondere aus Fig. 3 hervorgeht, hat der Abschnitt 29 auf seiner der Betätigungseinrichtung 6 und des Sattelschenkels 9 zugekehrten Seite einen Absatz 30, um ein Überstehen der Niederhaltefeder 18 zu vermeiden. Der Abschnitt 29 geht beidseitig in eine leicht abfallende Fläche 31 über, die nur im Basisbereich zur radialen und tangentialen Anlage und Abstützung der Niederhaltefeder 18 dient. Dadurch sind alle weiteren nachfolgend erläuterten Abschnitte der Niederhaltefeder 18 frei federnd wirksam. Dies trifft auch dann zu, wenn der Basisbereich oder der Übergang des Abschnittes 29 in die leicht abfallende Fläche 31 eine Ausnehmung 31' aufweist, wie in Fig. 2a gezeigt, in die die U-förmigen Abschnitte 34, 35 der Niederhaltefeder 18 einrasten können. Dadurch kann die Niederhaltefeder 18 mit den entsprechenden Bremsbacken komplett eingesetzt bzw. entfernt werden. Der Abschnitt 29 kann eine annähernd U-förmige Ausnehmung 32 aufweisen, die zum Einsetzen einer Verschleißanzeige 33 dient, wie in Fig. 5 gezeigt.

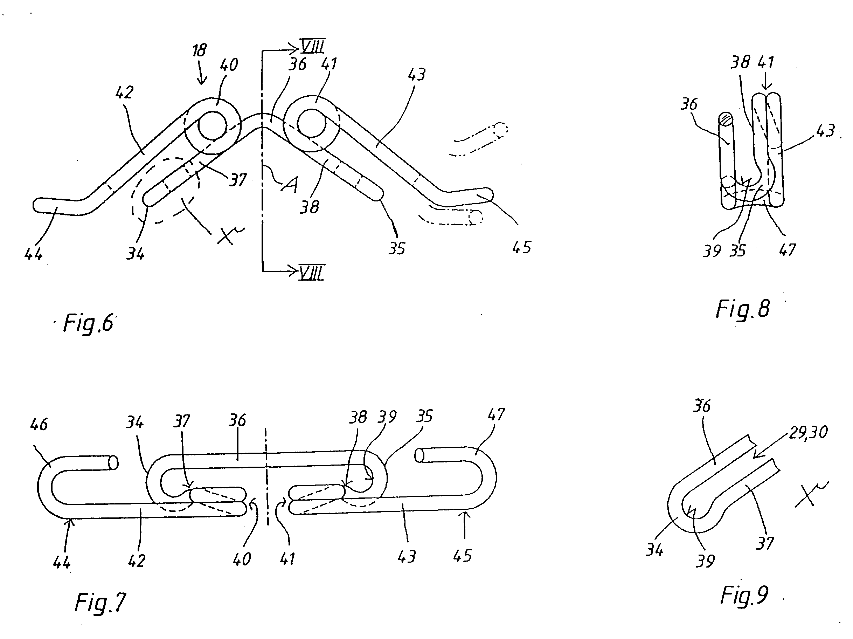

Nach Fig. 6 ist die Niederhaltefeder 18 als Drahtfeder symmetrisch zu der Achse A ausgebildet. Die Niederhaltefeder 18 weist zwei Abschnitte 34, 35 von im wesentlichen U-förmiger Gestalt auf, die die Schmalseiten des belagfreien Abschnittes 29 des Belagträgers 11, 12 am Übergang zu den leicht abfallenden Flächen 31 umgreifen. Die U-förmigen Abschnitte 34, 35 sind einerseits über einen sich radial nach außen erstreckenden V-förmigen Verbindungsabschnitt 36 verbunden. Dieser V-förmige Verbindungsabschnitt 36 übergreift die Verschleißanzeige 33 radial, um sie in der Ausnehmung 32 des Abschnittes 29 zu positionieren, wie in Fig. 5 und 6 gezeigt. Andererseits laufen von den Abschnitten 34, 35 über einen abgekröpften Biegeradius 39 Federschenkel 37, 38 annähernd parallel zum Verbindungsabschnitt 36 radial nach außen. Dadurch paßt sich dieser Abschnitt unterschiedlichen Wanddicken des belagfreien Abschnittes 29 an. Am oberen Ende der Federschenkel 37, 38 ist mindestens eine Federwindung 40, 41 ausgebildet, deren Wickelachse zur Drehachse der Bremsscheibe 2 annähernd parallel ist. Dabei ist die Lage jeder Federwindung 40, 41 gegenüber der radial äußeren Fläche des belagfreien Abschnittes 29 so gewählt, daß die Federwindungen annähernd über diesem Abschnitt liegen, so daß die Federwirkung nicht durch Anschlagen oder Reibung an diesem Teil beeinträchtigt wird. Gerade durch diese beiden Federwindungen und die genannte Maßnahme wird die erforderliche flache Federcharakteristik erzielt. Jede Federwindung 40, 41 geht in einen freien Federschenkel 42, 43 über, der sich radial nach innen zum Umfang der Bremsscheibe 2 hin erstreckt. Selbstverständlich können sich diese freien Federschenkel 42, 43 auch radial nach außen erstrecken, wenn die Einbauverhältnisse dies erfordern. Das Ende des freien Federschenkels 42, 43 ist in einem Federabschnitt 44, 45 abgekröpft und weist umgebogene Endteile 46, 47 auf. Diese Endteile 46, 47 sind zum Verbindungsabschnitt 36 hin umgebogen, wodurch gute Gleiteigenschaften der Niederhaltefeder 18 an den Abstützflächen und eine wirksame Einleitung der Federkraft im Zentrum des Reibbelages erzielt wird.

Der Einbau der Niederhaltefeder 18 ist überaus einfach, indem diese auf den belagfreien Abschnitt 29 des Belagträgers 11, 12 derart aufgesetzt wird, daß sich der V-förmige Verbindungsabschnitt 36 auf der Seite des Absatzes 30 befindet und somit nicht über die Ebene des Belagträgers vorsteht. Ist eine bereits erwähnte Verschleißanzeige 33 angeordnet, so übgergreift dieser Abschnitt 36 die Verschleißanzeige radial, um sie mit einfachen Mitteln zu positionieren. Die freien Federschenkel 42, 43 der Niederhaltefeder 18 sind dabei entlastet, wie dies in Fig. 6 mit den oberen strichpunktierten Linien angedeutet ist. Radial liegt die Niederhaltefeder 18 lediglich mit den U-förmigen Abschnitten 34, 35 auf der abfallenden Fläche 31 des belagfreien Abschnittes 29 auf, wodurch alle übrigen Federabschnitte in ihrer Bewegungsfreiheit nicht beeinträchtigt werden und somit eine Federwirkung auf den Belagträger 11, 12 ausüben können. Die mit dem Reibbelag 7, 10 versehenen Belagträger 11, 12 werden in bekannter Weise in die Führungen 13 bis 16 des Bremsenträgers 1 eingesetzt. Wegen der symmetrischen Ausbildung der Niederhaltefeder 18 ist eine verkehrte Einbaulage derselben nicht möglich.

Da die radial innere Kontur der Öffnung 17 des Bremssattelbereichs 8 mit ihren Freiräumen 27, 28 und den Anlageflächen 21, 22 in der bevorzugten Bremsrichtung D zwischen der Einlaufseite und der Auslaufseite der Bremsscheibe 2 unsymmetrisch ist, werden beim Aufsetzen und Verspannen des Bremssattels 5 die Federschenkel 42, 43 der Niederhaltefeder 18 unterschiedlich vorgespannt, wie in Fig. 1 gezeigt. Dabei liegt allein der abgekröpfte Federabschnitt 44, 46 an der Auslaufseite der Bremsscheibe an der Anlageflächen 23 an, wodurch der Belagträger 11, 12 nur radial gegen die radial inneren Führungsflächen 13, 14 vorgespannt wird. Auf der Einlaufseite der Bremsscheibe hingegen wird der Federschenkel 43 der Niederhaltefeder 18 durch die schräge Anlagefläche 22 sowohl tangential als auch radial vorgespannt. Mit diesen Federkräften wird auch der Belagträger 11, 12 verspannt, so daß er zusätzlich zu der radialen Anlage auf den radial inneren Führungsflächen 13', 14' auf der Einlaufseite der Bremsscheibe auch tangential auf der Auslaufseite der Bremsscheibe an den seitlichen Führungsflächen 15, 16 des Bremsenträgers 1 zur Anlage gelangt. Dadurch wird das störende seitliche Anschlagen der Belagträger 11, 12 in Bremsrichtung D vermieden.

An dieser Stelle sei noch darauf hingewiesen, daß die Niederhaltefeder 18 auch sehr wirkungsvoll in einem Bremssattel mit einer symmetrischen Innenkontur eingesetzt werden kann, wenn lediglich eine radiale Vorspannung der Belagträger erforderlich ist. Die günstige Federcharakteristik durch die freien Federschenkel 42, 43 mit den Federwindungen 40, 41 ermöglicht wirkunsgvoll eine optimale Dämpfung radialer Schwingungen der Belagträger durch eine größere Federlänge und einen größeren Federweg.

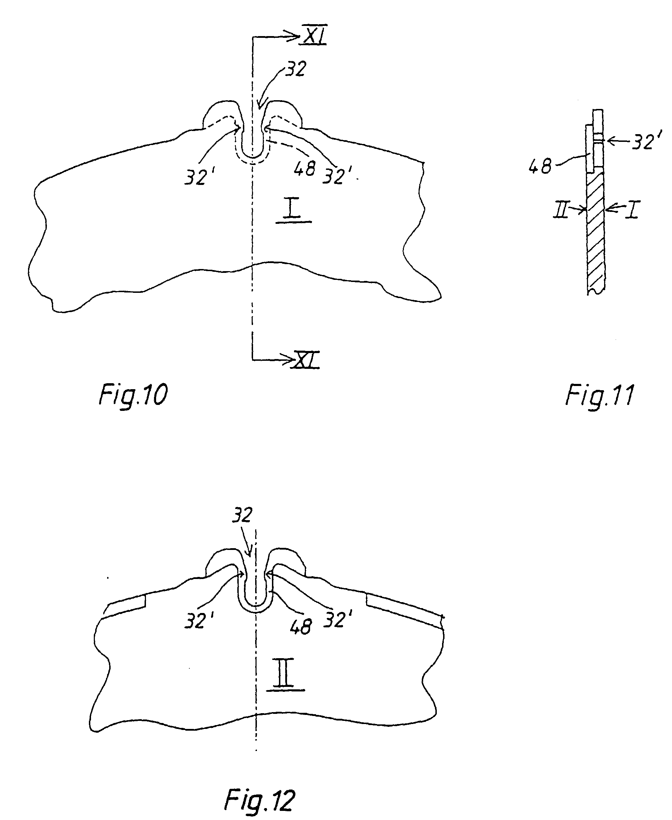

Bei der in den Fig. 10, 11 und 12 gezeigten Ausführungsform des Belagträgers 11, 12 ist die dem Belag zugekehrte Seite mit I bezeichnet, und die vom Belag abgekehrte Seite ist mit II bezeichnet. Der belagfreie Abschnitt weist auf seiner vom Reibbelag abgekehrten Seite II im Bereich der U-förmigen Ausnehmung 32 hakenförmige Vorsprünge 32' und eine Vertiefung 48 auf. Diese Vorsprünge 32' und die Vertiefung 48 dienen der besseren Halterung sowie dem ebenen Abschluß eines Bundes der Verschleißanzeige 33 gegenüber einem frei beweglichen Federabschnitt. Dadurch ist nicht nur die allseitige Positionierung der Verschleißanzeige verbessert, sondern es wird auch eine anschlagfreie Beweglichkeit der Federhalterung erzielt.

Wenngleich die Erfindung vorstehend anhand einer Gleitsattel-Scheibenbremse erläutert wurde, so ist davon auszugehen, daß der Grundgedanke der Erfindung in gleich vorteilhafter Weise auch bei einer Festsattel-Scheibenbremse verwirklicht werden kann.

## Patentansprüche

1. Federanordnung zum Niederhalten der Bremsbeläge in einer Scheibenbremse, wobei der Belagträger (11, 12) einen sich radial nach außen erstreckenden belagfreien Abschnitt (29) aufweist, an dem ein Halteabschnitt einer Niederhaltefeder (18) befestigbar ist, wobei die Niederhaltefeder (18) symmetrisch ausgebildet und aus Stahldraht hergestellt ist und in der Mitte ihrer Symmetrieachse (A) einen den belagfreien Abschnitt (29) des Belagträgers (11, 12) allseitig umgreifenden Halteabschnitt und zwei sich von diesem in entgegengesetzten Richtungen erstreckende Abschnitte umfaßt, die sich an zwei Anlageflächen (21, 22) abstützen, die auf beiden Seiten einer den belagfreien Abschnitt (29) des Belagträgers (11, 12) aufnehmenden Öffnung (17) eines Bremssattels (5) an dessen Unterseite ausgebildet sind, dadurch **gekennzeichnet,** daß der Halteabschnitt der Niederhaltefeder (18) auf der dem Reibbelag (7, 10) abgekehrten Seite des belagfreien Abschnittes (29) des Belagträgers (11, 12) von einem durchgehenden V-förmigen Verbindungsabschnitt (36) und auf der dem Reibbelag zugekehrten Seite des belagfreien Abschnittes (29) von zwei zu dem V-förmigen Verbindungsabschnitt (36) parallelen Federschenkeln (37, 38) gebildet ist, daß sich von diesen Federschenkeln (37, 38) freie Federschenkel (42, 43) in entgegengesetzten Richtungen nach außen erstrecken und daß im Übergangsbereich von jedem Federschenkel (37, 38) in den entsprechenden freien Federschenkel (42, 43) mindestens eine Federwindung (40, 41) ausgebildet ist.

2. Federanordnung nach Anspruch 1, dadurch **gekennzeichnet,** daß der belagfreie Abschnitt (29) auf der vom Reibbelag (7, 10) abgekehrten Seite einen den V-förmigen Verbindungsabschnitt (36) der Niederhaltefeder (18) aufnehmenden Absatz (30) aufweist, wobei beide Seiten des belagfreien Abschnittes (29) im Bereich des Absatzes (30) glatt ausgebildet sind.

3. Federanordnung nach Anspruch 1 oder 2, dadurch **gekennzeichnet,** daß der Bremssattel (5) im Bereich der Anlageflächen (21, 22, 23, 24 für die freien Federschenkel (42, 43) der Niederhaltefeder (18) unsymmetrisch ausgebildet ist, daß eine auf der Einlaufseite der Bremsscheibe (2) ausgebildete schräge Anlagefläche (22) zur Radialebene stärker geneigt ist als eine auf der Auslaufseite ausgebildete schräge Anlagefläche (21) und daß eine auf der Einlaufseite der Bremsscheibe (2) ausgebildete tangentiale Anlagefläche (24) von der entsprechenden Tangente der Bremsscheibe (2) einen größeren Abstand aufweist als eine auf der Auslaufseite ausgebildete tangentiale Anlagefläche (23).

4. Federanordnung nach einem der Ansprüche 1 bis 3, dadurch **gekennzeichnet**, daß der belagfreie Abschnitt (29) des Belagträgers (11, 12) eine radial verlaufende U-förmige Ausnehmung (32) aufweist, in die eine Verschleißanzeige (33) einsetzbar ist, und daß der Verbindungsabschnitt (36) der Niederhaltefeder (18) die Verschleißanzeige (33) radial übergreift und festlegt.

5. Federanordnung nach Anspruch 4, dadurch **gekennzeichnet**, daß der belagfreie Abschnitt (29) des Belagträgers (11, 12) auf seiner vom Reibbelag (7, 10) abgekehrten Seite im Bereich der U-förmigen Ausnehmung (32) eine der Halterung der Niederhaltefeder (18) und der Verschleißanzeige (33) dienende Vertiefung (48) aufweist.

6. Federanordnung nach Anspruch 4 oder 5, dadurch **gekennzeichnet**, daß der belagfreie Abschnitt (29) des Belagträgers (11, 12) auf beiden Seiten mit einer Ausnehmung (31') versehen ist, mit der U-förmige Abschnitte (34, 35) zwischen dem Verbindungsabschnitt (36) und den Federschenkeln (37, 38) der Niederhaltefeder (18) federnd in Eingriff bringbar sind.

7. Federanordnung nach einem der Ansprüche 1 bis 6, dadurch **gekennzeichnet**, daß die Endteile (46, 47) der freien Federschenkel (42, 43) der Niederhaltefeder (18) zum Verbindungsabschnitt (36) hin umgebogen sind.

8. Federanordnung nach einem der Ansprüche 1 bis 7,dadurch **gekennzeichnet**, daß die Federwindung (40, 41) der Niederhaltefeder (18) eine annähernd kreisförmige Kontur aufweist, wobei ihre Wickelachse zur Achse der Bremsscheibe (2) annähernd parallel ist.

9. Federanordnung nach Anspruch 8, dadurch **gekennzeichnet**, daß die Federwindung (40, 41) der Niederhaltefeder (18) im wesentlichen über dem belagfreien Abschnitt (29) des Belagträgers (11, 12) angeordnet ist.

10. Belagträger einer Scheibenbremse mit einem der Festlegung einer Federanordnung nach einem der Ansprüche 1 bis 9 dienenden belagfreien Abschnitt, dadurch **gekennzeichnet**, daß im Bereich des freien Abschnittes eine U-förmige Ausnehmung(32) vorgesehen ist, die eine Rasthalterung der Verschleißanzeige (33) ermöglichende hakenförmige Vorsprünge (32') aufweist.

11. Belagträger nach Anspruch 10, dadurch **gekennzeichnet**, daß der belagfreie Abschnitt auf seiner vom Reibbelag abgekehrten Seite (II) im Bereich der U-förmigen Ausnehmung (32) eine die Halterung der Niederhaltefeder (18) und der Verschleißanzeige (33) begünstigende Vertiefung (48) aufweist.

12. Belagträger nach Anspruch 10 oder 11 mit einer an demselben vorgesehenen Verschleißanzeige, dadurch **gekennzeichnet**, daß die Halterung der Verschleißanzeige (33) durch die Vertiefung (48) gebildet ist.

## Claims

1. Spring arrangement to secure brake pad / backing plate assemblies within a disc brake caliper, whereby the upper area of the brake pad backing plate (11, 12) is kept free of friction material (29) to accommodate the clamping section of a hold down spring (18) made of steel wire in a symmetric design which is wrapped around the centre of its symmetrical axis (A) with the two spring leg sections in opposite directions arranged on the friction material free area (29) of the backing plate anchored against abutments (21, 22) which are shaped to mate with the corresponding opening (17) on the underside of the brake caliper (5), characterised by the clamping section of the hold down spring (18) forming a V-shaped connection (36) on the friction material free area (29) of the backing plate (11, 12) with parallel arranged spring legs (37, 38) from which two free spring leg sections (42, 43) with a minimum of one spring coil (40, 41) in their transition area protrude in opposite directions toward the outside.

2. Spring arrangement according to claim 1, characterised by the friction material free area of the backing plate (29) being equipped with an indentation to accommodate the V-shaped connection (36), whereby both sides of the friction material free area (29) around the indentation (30) are flat.

3. Spring arrangement according to claim 1 or 2, characterised by the brake caliper (5) in the area of the abutment surfaces (21, 22, 23, 24) for the free spring legs (42, 43) of the hold down spring being shaped non symmetrically and that the ramp shaped abutment surface (22) on the run-in side of the brake disc (2) is steeper than the ramp shaped tangential abutment surface (24) on the run-out side, and that the tangential abutment surface (23) on the run-in side is spaced farther from the tangent of the brake disc (2) than that of the run-in side.

4. Spring arrangement according to patent claims 1 to 3, characterised by the friction material free area (29) of the backing plate (11, 12) being equipped with a U-shaped radial recess (32) for the installation of a brake pad wear indicator (33) and that the connecting section (36) of the hold down spring (18) clamps and secures the wear indicator (33).

5. Spring arrangement according to claim 4, characterised by the friction material free section (29) of the backing plate (11, 12) being equipped with an indentation in the area of the U-shaped recess (32) to accommodate the hold down spring (18) and wear indicator (33).

6. Spring arrangement according to claims 4 or 5, characterised by the friction material free area (29) of the backing plate (11, 12) being equipped on both sides with a recessed clearance (31) with which the U-shaped sections (34, 35) between the connection area (36) and the spring legs (37, 38) of the hold down spring can mate.

7. Spring arrangement according to one of the above listed claims, characterised by the tail sections (42, 43) of the free legs (42, 43) on the hold down spring (18) being bent towards the connecting section (36).

8. Spring arrangement according to one of the aforementioned claims, charaterised by the winding (40, 41) of the hold down spring (18) exhibiting a circular shape, whereby the axis of the winding closely parallels the axis of the brake disc (2).

9. Spring arrangement according to claim 8, characterised by the winding (40, 41) of the hold down spring (18) being positioned over the friction material free area (29) of the brake pad backing plate (11, 12).

10. Brake pad backing plate of a disc brake with a friction material free area for the installation of a spring arrangement according to one of the aforementioned claims, characterised by the U-shaped recess (32) forming a holder for the wear indicator (33) with hook shaped lips (32).

11. Brake pad backing plate according to claim 10, characterised by the friction material free area on the opposite side (11) of the brake pad exhibiting a recessed surface are (48) for the installation of hold down spring (18) and wear indicator (33).

12. Brake pad backing plate according to claim 10 or 11 with wear indicator, characterised by the wear indicator (33) holder being integrated into the backing plate as a recess (48).

## Revendications

1. Agencement à ressort pour le maintien pressé des garnitures de frein dans un frein à disque, le porte-garniture (11, 12) comportant une portion (29) sans garniture s'étendant radialement vers l'extérieur et à laquelle peut être fixée une portion de maintien d'un ressort de maintien pressé (18), le ressort de maintien pressé (18) étant réalisé symétriquement et fabriqué en fil d'acier et comprenant, au milieu de son axe de symétrie (A), une portion de maintien embrassant, de tous côtés, la portion sans garniture (29) du porte-garniture (11, 12) et deux portions s'étendant, depuis cette portion de maintien, dans des sens opposés et lesquelles s'appuient contre deux surfaces d'appui (21, 22) qui sont formées sur les deux côtés d'un orifice (17) d'un étrier de frein (5) à la face inférieure de celui-ci, lequel orifice reçoit la portion sans garniture (29) du porte-garniture (11, 12), caractérisé en ce que la portion de maintien du ressort de maintien pressé (18) est constituée, sur le côté de la portion sans garniture (29) du porte-garniture (11, 12), qui est tourné en sens opposé à la garniture de friction (7, 10), par une portion de liaison continue en forme de V (36) et, sur le côté de la portion sans garniture (29), qui est orienté vers la garniture de friction, par deux branches de ressort (37, 38) parallèles à la portion de liaison (36) en forme de V, en ce que des branches de ressort libres (42, 43) s'étendent vers l'extérieur dans des sens opposés depuis ces branches de ressort (37, 38) et en ce qu'au moins une spire de ressort (40, 41) est réalisée dans la zone de passage de chaque branche de ressort (37, 38) à la branche libre correspondante (42, 43).

2. Agencement de ressort selon la revendication 1, caractérisé en ce que la portion sans garniture (29) comporte, sur le côté orienté en sens opposé à la garniture de friction (7, 10), un talon (30) recevant la portion de liaison (36) en forme de V du ressort de maintien pressé (18), les deux faces de la portion sans garniture (29) au voisinage du talon (30) étant réalisées de façon à être lisses.

3. Agencement de ressort selon la revendication 1 ou 2, caractérisé en ce que l'étrier de frein (5) est réalisé de façon asymétrique au voisinage des surfaces d'appui (21, 22, 23, 24) pour les branches de ressort libres (42, 43) du ressort de maintien pressé (18), en ce qu'une surface d'appui (22), réalisée de façon à être oblique sur le côté d'entrée du disque de frein (2), est plus fortement inclinée sur le plan radial qu'une surface d'appui (21) réalisée de façon oblique sur le côté de sortie et en ce qu'une surface d'appui tangentielle (24), réalisée sur le côté d'entrée du disque de frein (2), présente une plus grande distance à la tangente correspondante du disque de frein (2) qu'une surface d'appui tangentielle (23) réalisée sur le côté de sortie.

4. Agencement de ressort selon l'une des revendications 1 à 3, caractérisé en ce que la portion sans garniture (29) du porte-garniture (11, 12) comporte un évidement (32) en forme de U s'étendent radialement, dans lequel est insérable un indicateur d'usure (33) et en ce que la portion de liaison (36) du ressort de maintien pressé (18) embrasse radialement par-dessus et immobilise l'indicateur d'usure (33).

5. Agencement à ressort selon la revendication 4, caractérisé en ce que la portion sans garniture (29) du porte-garniture (11, 12) comporte, sur son côté orienté en sens opposé à la garniture de friction (7, 10) et au voisinage de l'évidement (32) en forme de U, un creux (48) servant à l'indicateur d'usure (33).

6. Agencement à ressort selon la revendication 4 ou 5, caractérisé en ce que la portion sans garniture (29) du porte-garniture (11, 12) est pourvue, des deux côtés, d'un évidement (31') avec lequel des portions (34, 35) en forme de U, entre la portion de liaison (36) et les branches de ressort (37, 38) du ressort de maintien pressé (18), peut être mises élastiquement en prise.

7. Agencement à ressort selon l'une des revendications 1 à 6, caractérisé en ce que les parties extrêmes (46, 47) des branches de ressort libres (42, 43) du ressort de maintien pressée (18) sont recourbées vers la portion de liaison (36).

8. Agencement à ressort selon l'une des revendications 1 à 7, caractérisé en ce que la spire de ressort (40, 41) du ressort de maintien pressé (18) présente un contour approximativement circulaire, son axe d'enroulement étant approximativement parallèle à l'axe du disque de frein (2).

9. Agencement à ressort selon la revendication 8, caractérisé en ce que la spire de ressort (40, 41) du ressort de maintien pressé (18) est disposée sensiblement au-dessus de la portion sans garniture (29) du porte-garniture (11, 12).

10. Porte-garniture d'un frein à disque avec une portion sans garniture servant à la fixation d'un agencement à ressort selon l'une des revendications 1 à 9, caractérisé en ce qu'au voisinage de la portion libre est prévu un évidement (32) en forme de U qui comporte des saillies (32') en forme de crochet permettant un maintien à enclenchement de l'indicateur d'usure (33).

11. Porte-garniture selon la revendication 10, caractérisé en ce que la portion sans garniture, sur son côté (II) tourné en sens opposée à la garniture de friction, présente, au voisinage de l'évidement (32) en forme de U, un creux (48) favorisant le maintien du ressort de maintien pressé (18) et de l'indicateur d'usure (33).

12. Porte-garniture selon la revendication 10 ou 11, avec un indicateur d'usure prévu sur celui-ci, caractérisé en ce que le support de l'indicateur d'usure (33) est formé par le creux (48).
